# EUROPEAN PATENT APPLICATION

(11) **EP 4 807 316 A1**
(43) Date of publication of application: **16.09.2026**
(21) Application number: 26161842.5
(22) Date of filing: 03.03.2026
(51) Int. Cl.: G01B 11/24, G01N 15/00, G01N 15/0205

(54) **METHOD AND SYSTEM FOR EVALUATING SPHERICAL PERFECTNESS OF PLASMONIC NANOPARTICLE**

(30) Priority: 11.03.2025 KR 20250031409
(71) Applicant: Gwangju Institute of Science and Technology (GIST), Gwangju 61005 (KR)
(72) Inventor: Kim, Joon Heon, 61005 Buk-gu, Gwangju, (KR); Park, Jung Su, 61005 Buk-gu, Gwangju (KR)
(74) Representative: Jung, Minkyu

(57) **Abstract**

The present disclosure relates to a method and system that can quantitatively evaluate the spherical perfection of plasmonic nanoparticles. The system for evaluating spherical perfection of nanoparticles according to an embodiment of the present disclosure includes: a light output unit configured to emit light polarized in one direction to the nanoparticles; a spectroscopic unit configured to generate first and second scattering spectra by controlling a polarization direction of light scattered from the nanoparticles into one direction and another direction and measuring the polarization-controlled light; and a processor configured to determine sphericity of the nanoparticles on the basis of values of the first and second scattering spectra corresponding to a peak wavelength of the first scattering spectrum.

## Description

### BACKGROUND

### Technical Field

The present disclosure relates to a method and system that can quantitatively evaluate the spherical perfection of plasmonic nanoparticles.

### Description of the Related Art

A plasmonic nanoparticle refers to a metallic nanoparticle that has high-efficiency optical absorption and scattering due to the characteristics of localized surface plasmon resonance (LSPR), and, because it has distinctive optical properties, it is expected to be applicable to catalysis, optoelectronics, image processing, molecular detection, biosensors, and drug delivery.

The optical properties of plasmonic nanoparticles can change sensitively depending on the size and shape of the particles. In particular, in the case of products that use spherical nanoparticles, it is important to identify quantitative information on the shape of the particles because the closer the shape of the nanoparticles is to a perfect sphere and the more uniform their size is, the more uniform optical properties they exhibit, thereby enabling reliable results to be obtained.

In general, plasmonic nanoparticles are synthesized in large quantities in a solution through chemical methods, and up to now, there has been a limitation in that, aside from checking the shapes of particles through Transmission Electron Microscopy (TEM) image analysis of individual particles arbitrarily extracted from a solution, it has been difficult to obtain quantitative data on the shapes of particles.

### SUMMARY

An objective of the present disclosure is to quantitatively evaluate the spherical perfection of plasmonic nanoparticles.

The objectives of the present disclosure are not limited to those described above and other objectives and advantages not stated herein may be understood through the following description and may be clear by embodiments of the present disclosure. Further, it would be easily known that the objectives and advantages of the present disclosure may be achieved by the configurations described in claims and combinations thereof.

In order to achieve the objectives described above, a system for evaluating spherical perfection of nanoparticles according to an embodiment of the present disclosure includes: a light output unit configured to emit light polarized in one direction to the nanoparticles; a spectroscopic unit configured to generate first and second scattering spectra by controlling a polarization direction of light scattered from the nanoparticles into one direction and another direction and measuring the polarization-controlled light; and a processor configured to determine sphericity of the nanoparticles on the basis of values of the first and second scattering spectra corresponding to a peak wavelength of the first scattering spectrum.

The present disclosure has an advantage that it is possible to identify the quality of spherical nanoparticles even without checking shapes through TEM image analysis by quickly and quantitatively evaluating the spherical perfection of plasmonic nanoparticles in a solution itself through an optical method.

Detailed effects of the present disclosure in addition to the above effects will be described with the following detailed description for accomplishing the present disclosure.

### BRIEF DESCRIPTION OF THE DRAWINGS

FIG. 1 is a diagram illustrating a TEM image of gold nanoparticles;
FIG. 2A and 2B are diagrams illustrating commercial product brochures of plasmonic nanoparticles;
FIG. 3 is a graph illustrating the absorption of nanoparticles by wavelength according to spherical perfection;
FIG. 4 is a diagram illustrating a system for evaluating the spherical perfection of nanoparticles according to an embodiment of the present disclosure;
FIG. 5 is a flowchart illustrating a method for evaluating the spherical perfection of nanoparticles according to an embodiment of the present disclosure;
FIG. 6 is a diagram for explaining a process of calculating a depolarization ratio in the present disclosure;
FIG. 7 is a diagram for explaining the sensitivity of the depolarization ratio according to the spherical perfection of nanoparticles;
FIG. 8 is a diagram for explaining a process of extracting a value that serves as a basis for determining spherical perfection from a depolarization ratio spectrum;
FIG. 9 is a graph for explaining the relationship between a depolarization ratio and spherical perfection;
FIG. 10 is a flowchart illustrating a method for evaluating the spherical perfection of nanoparticles according to another embodiment of the present disclosure; and
FIG. 11 is a diagram illustrating a comparison of spherical perfection determination processes according to the number of peaks in an extinction spectrum.

### DETAILED DESCRIPTION

The objectives, characteristics, and advantages will be described in detail below with reference to the accompanying drawings, so those skilled in the art may easily achieve the spirit of the present disclosure. In describing the present disclosure, when it is determined that a detailed description of known technologies related to the present disclosure may unnecessarily obscure the spirit of the present disclosure, detailed description is omitted. Hereinafter, preferred embodiments of the present disclosure will be described with reference to accompanying drawings. The same reference numerals are used to indicate the same or similar components in the drawings.

Although terms "first", "second", etc. are used to describe various components in the specification, it should be noted that these components are not limited by the terms. These terms are used to discriminate one component from another component and it is apparent that a first component may be a second component unless specifically stated otherwise.

Further, in this specification, when a certain configuration is disposed "over (or under)" or "on (beneath)" of a component in the following description, it may mean not only that the certain configuration is disposed on the top (or bottom) of the component, but that another configuration may be interposed between the component and the certain configuration disposed on (or beneath) the component.

Further, in this specification, when a certain component is "connected", "coupled", or "jointed" to another component, it should be understood that the components may be directly connected or jointed to each other, but another component may be "interposed" between the components or the components may be "connected", "coupled", or "jointed" through another component.

Further, singular forms that are used in this specification are intended to include plural forms unless the context clearly indicates otherwise. In the present disclosure, terms "configured", "include", or the like should not be construed as necessarily including several components or several steps described herein, in which some of the components or steps may not be included or additional components or steps may be further included.

In addition, in the present disclosure, when "A and/or B" is stated, it means A, B, or both A and B unless specifically stated otherwise, and when "C to D" is stated, it means equal to or greater than C and equal to or less than D unless specifically stated otherwise.

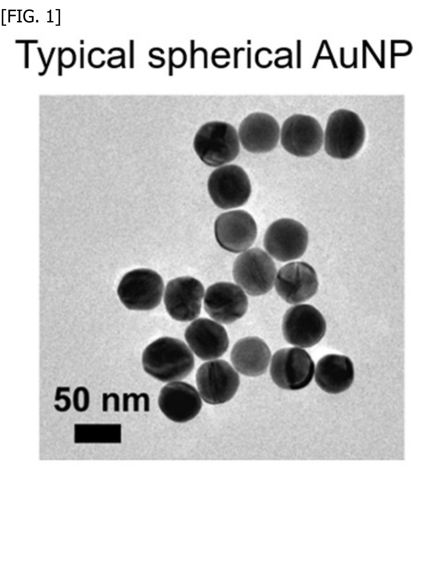

The present disclosure relates to a method and system that can quantitatively evaluate the spherical perfection of plasmonic nanoparticles, and prior to the detailed description of the present disclosure, the problems of the conventional market and the related art will be described first with reference to FIGS. 1 to 3.

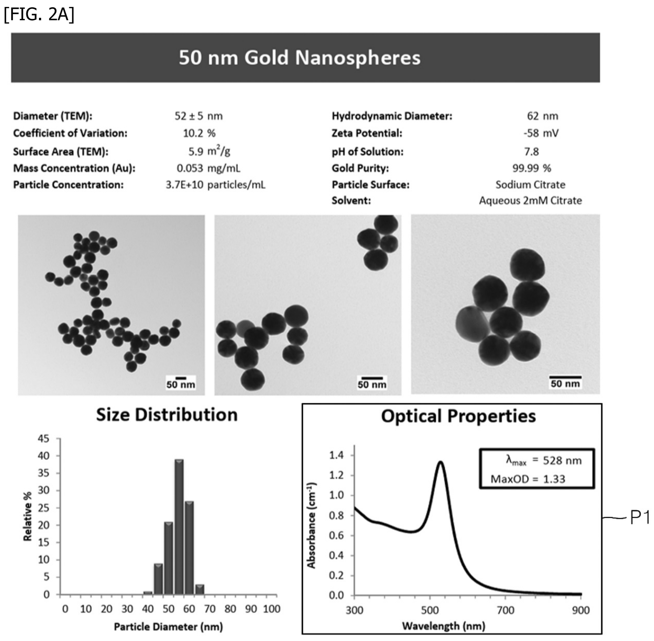

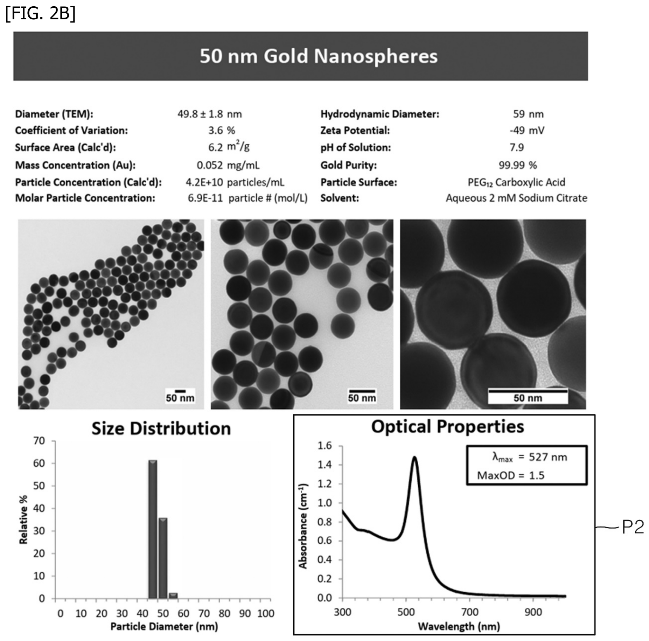

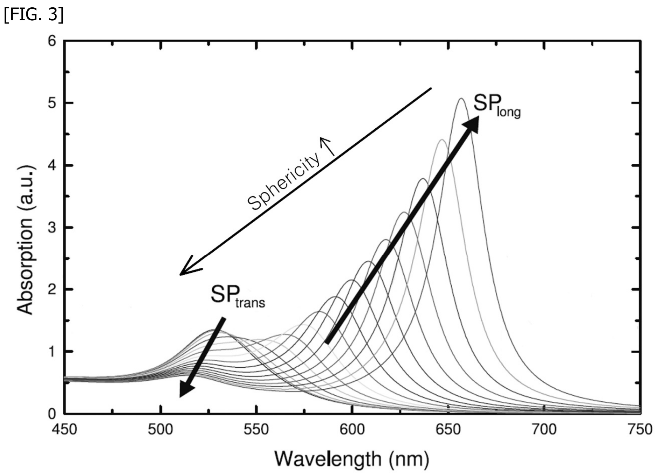

FIG. 1 is a diagram illustrating a TEM image of gold nanoparticles and FIG. 2 is a diagram illustrating a commercial product brochure of plasmonic nanoparticles. Further, FIG. 3 is a graph illustrating the absorption of nanoparticles by wavelength according to spherical perfection.

Referring to the TEM image of FIG. 1, spherical gold nanoparticles (AuNPs) may be produced with non-uniform sizes depending on the precision of the production process, and even if the sizes are uniform, their shapes may not be perfectly spherical. Due to this limitation, the nanoparticle supply market provides consumers with quantified characteristics of nanoparticles.

FIGS. 2A and 2B are two brochures for 50-nm gold nanoparticles, and the uniformity of the sizes and shapes of the two nanoparticles in the TEM images may differ from each other. In order to quantify these morphological differences and the resulting optical differences, the brochures provide quantitative values for particle properties (diameter, hydrodynamic diameter, coefficient of variation, zeta potential, etc.)

However, in the case of spherical nanoparticles, not only size uniformity but also shape uniformity, specifically spherical perfection, are very important factors, but there is a limitation in that, with the brochures described above alone, it is difficult to quantitatively identify the spherical perfection of nanoparticles other than through TEM images.

Specifically, although it is known in the related art that the optical absorption/scattering properties vary depending on the shape of nanoparticles, an optical absorption spectrum measured in a solution is influenced by various factors other than the characteristics of only the particles dispersed in the solution, so there is a problem that it is very difficult to infer only spherical perfection from that difference.

That is, comparing FIGS. 2A and 2B, it can be identified that the spherical perfection of the nanoparticles shown in FIG. 2B is relatively higher than that of the nanoparticles shown in FIG. 2A on the basis of the TEM images. However, comparing the absorption spectra P1 and P2 of the two nanoparticles, the waveforms and peak wavelengths of 528 nm and 527 nm are extremely similar, so there is a limitation that the spherical perfection of the two nanoparticles cannot be quantitatively distinguished only from the optical absorption spectrum characteristic.

Referring to the absorption by wavelength according to changes in spherical perfection (sphericity) of particles shown in FIG. 3, when the spherical perfection of nanoparticles is greatly reduced to become closer to a rod shape, it is easy to distinguish the shape differences of the particles on the basis of the two peak wavelengths in an absorption spectrum that sensitively vary depending on the aspect ratio of nanorods. However, since the higher the spherical perfection of nanoparticles is, two peaks merge into a single peak, as described with reference to FIG. 2, it is difficult to distinguish differences in spherical perfection between particles solely from the absorption spectrum.

Therefore, although the optical absorption spectrum characteristic can be used to distinguish nanorods from spherical nanoparticles, they cannot serve as a meaningful indicator for distinguishing the perfection between spherical nanoparticles.

The present disclosure, which is intended to overcome such market conditions and technical limitations in the related art, and an objective of the present disclosure is to quantitatively evaluate the spherical perfection of plasmonic nanoparticles in a solution.

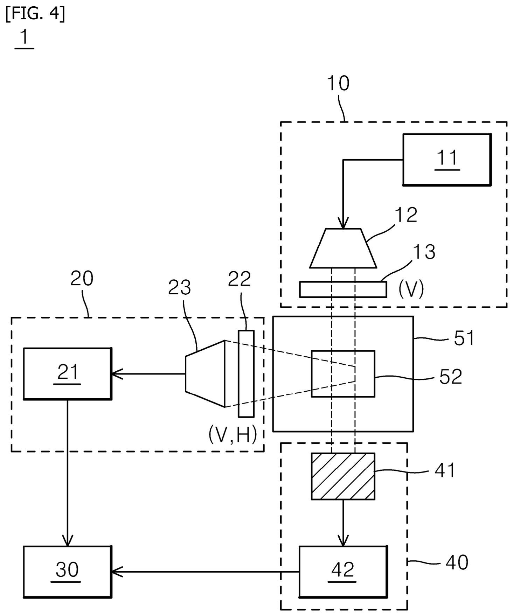

Hereinafter, a system and method for evaluating spherical perfection according to an embodiment of the present disclosure will be described in detail with reference to FIGS. 4 to 9.

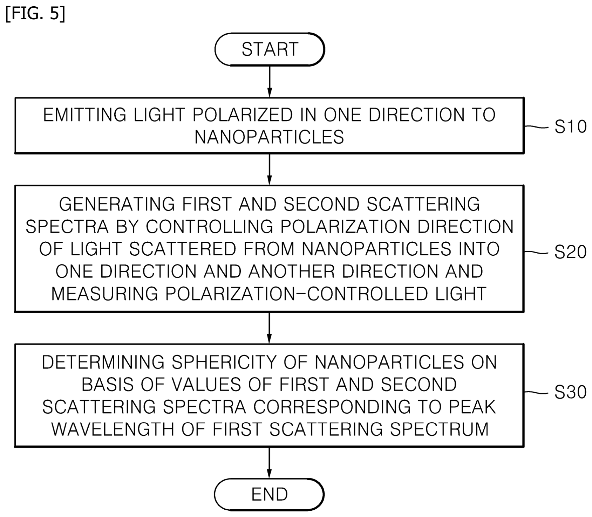

FIG. 4 is a diagram illustrating a system for evaluating the spherical perfection of nanoparticles according to an embodiment of the present disclosure and FIG. 5 is a flowchart illustrating a method for evaluating the spherical perfection of nanoparticles according to an embodiment of the present disclosure.

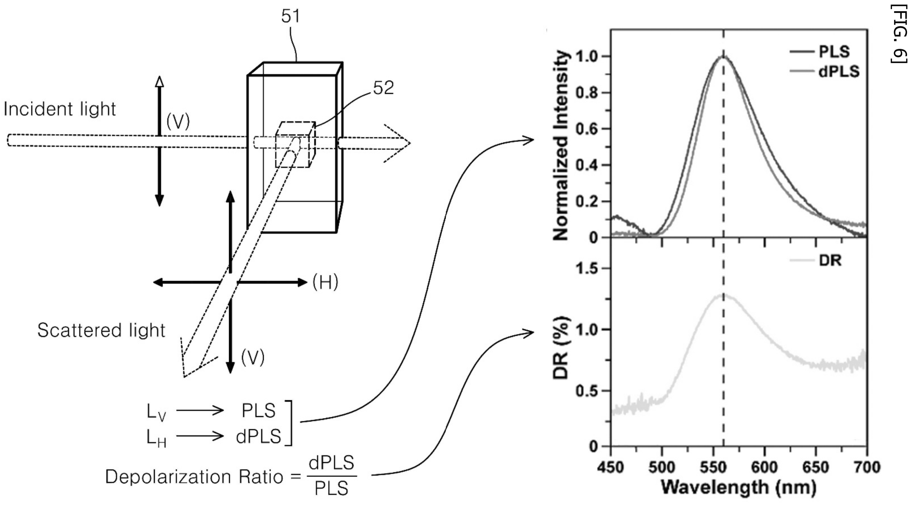

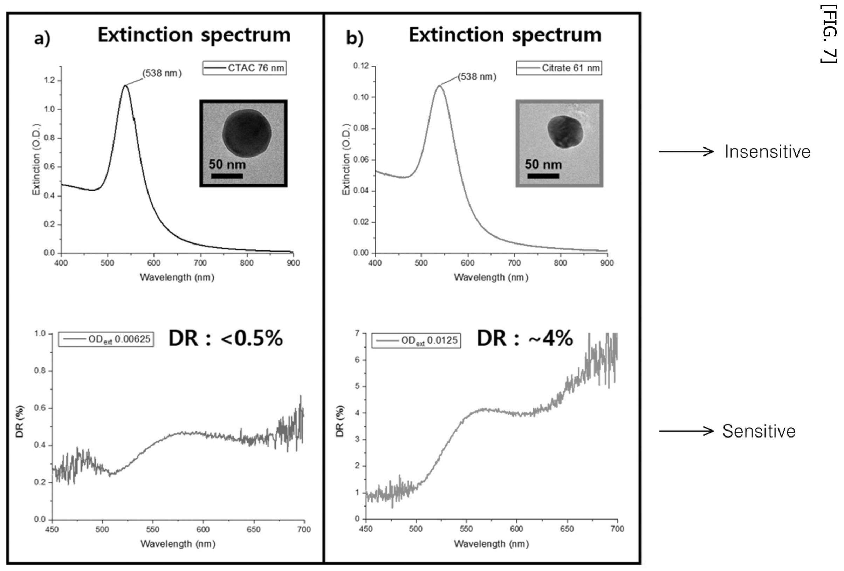

FIG. 6 is a diagram for explaining a process of calculating a depolarization ratio in the present disclosure and FIG. 7 is a diagram for explaining the sensitivity of the depolarization ratio according to the spherical perfection of nanoparticles.

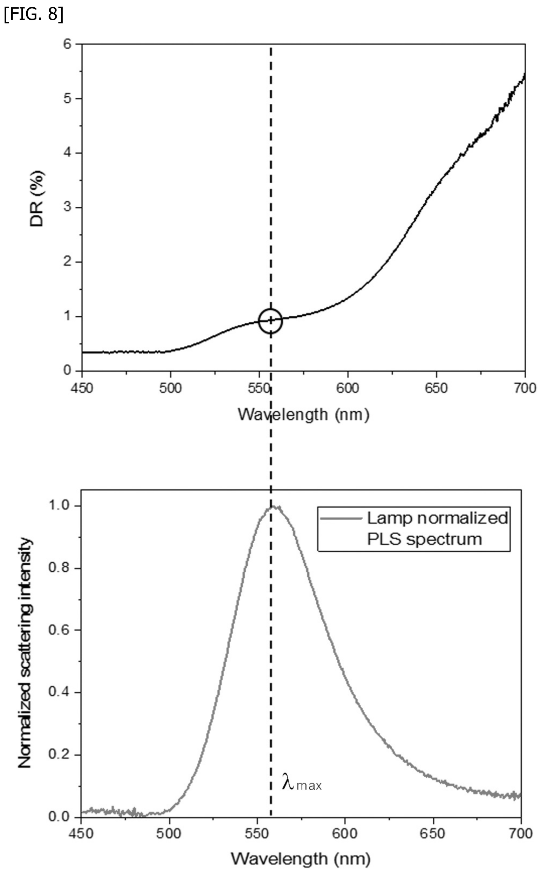

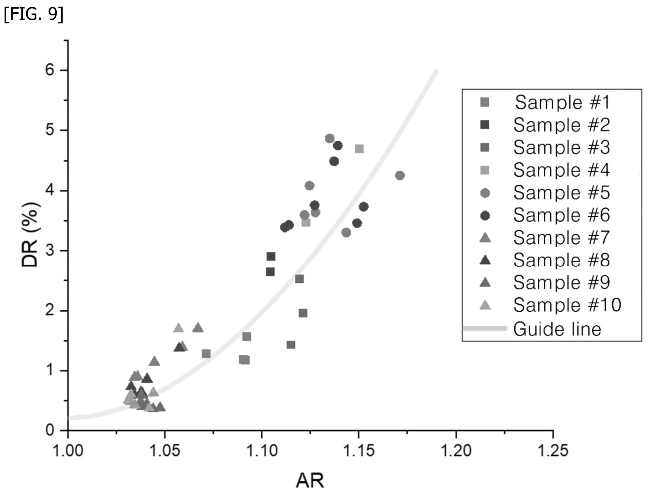

FIG. 8 is a diagram for explaining a process of extracting a value that serves as a basis for determining spherical perfection from a depolarization ratio spectrum and FIG. 9 is a graph for explaining the relationship between a depolarization ratio and spherical perfection.

Referring to FIG. 4, a system 1 for evaluating the spherical perfection of nanoparticles according to an embodiment of the present disclosure may include a light output unit 10, a spectroscopic unit 20, a processor 30, a sub-spectroscopic unit 40, a cuvette holder 51, and a sample 52. However, system 1 shown in FIG. 4 is based on an embodiment, the components of the present disclosure are not limited to the embodiment shown in FIG. 1, and if necessary, some components may be added, changed, or removed.

The processor 30 can control the light output unit 10, the spectroscopic unit 20, and the sub-spectroscopic unit 40, and to this end, the processor 30 may include at least one physical element of application specific integrated circuits (ASICs), digital signal processors (DSPs), digital signal processing devices (DSPDs), programmable logic devices (PLDs), field programmable gate arrays (FPGAs), a controller, and a micro-controller.

Meanwhile, referring to FIG. 5, a method for evaluating the spherical perfection of nanoparticles according to an embodiment of the present disclosure may include a step S10 of emitting light polarized in one direction to nanoparticles, a step S20 of generating first and second scattering spectra by controlling the polarization direction of light scattered from the nanoparticles into one direction and another direction and measuring the polarization-controlled light, and a step S30 of determining the sphericity of the nanoparticles on the basis of the values of the first and second scattering spectra corresponding to the peak wavelength of the first scattering spectrum.

However, the method for evaluating spherical perfection shown in FIG. 5 is based on an embodiment, the steps of the present disclosure are not limited to the embodiment shown in FIG. 5, and if necessary, some steps may be added, changed, or removed.

The steps shown in FIG. 5 can be performed by the processor 30 described above, and hereafter, the steps are described in detail.

The processor 30 can control the light output unit 10 to emit light polarized in one direction to nanoparticles (S10). In the present disclosure, nanoparticles may be plasmonic particles and may be included in the sample 52 in the cuvette holder 51. Meanwhile, the sample 52 may include a solution in which the nanoparticles are diluted to a predetermined concentration.

Referring again to FIG. 4, in order to polarize the light that is emitted to the nanoparticles, the light output unit 10 may include a light source 11, a collimating lens 12, and a polarizer 13.

The light source 11 can output light. In an example, the light source 11 may be implemented as a fiber-coupled LED. The collimating lens 12 can collimate the light delivered through the optical fiber and provide it to the polarizer 13. The polarizer 13 can control the polarization of the light aligned by the lens into one direction, for example, into a vertical direction V. The polarization-controlled light can be emitted to the sample 52 in the cuvette holder 51.

Next, the processor 30 can control the polarization direction of the light scattered from the nanoparticles (hereinafter, also referred to as scattered light) into one direction and another direction through the spectroscopic unit 20 and measure the polarization-controlled light, and, on this basis, can generate first and second scattering spectra (S20).

In the present disclosure, a scattering spectrum may be determined by the scattering intensity by wavelength. The scattering spectrum may include a spectrum that is expressed as a value normalized in consideration of the wavelength characteristics of the light source 11 itself, and may also include a spectrum that is obtained in consideration of the optical characteristics (such as absorption and scattering) of the light source 11 with respect to the sample 52 that does not contain nanoparticles.

Referring again to FIG. 4, the spectroscopic unit 20 for generating a scattering spectrum may include any one of a rotating polarizer 22 and a polarization beam splitter (PBS) 22, and may further include a collimating lens 23 and a spectrometer 21.

The rotating polarizer 22 or the polarization beam splitter 22 can control the polarization of the scattered light into one direction the same as the polarization direction controlled by the light output unit 10 and into another direction different from that direction. In an example, when the polarization of light is controlled into the vertical direction by the polarizer 13 in the light output unit 10, the rotating polarizer 22 or the polarization beam splitter 22 in the spectroscopic unit 20 can control the polarization of the scattered light into the vertical direction V and the horizontal direction H. The collimating lens 23 can collimate the polarization-controlled light from the rotating polarizer 22 or the polarization beam splitter 22, and the spectrometer 21 can generate first and second scattering spectra by measuring the collimated light. To this end, the spectrometer 21 may include a Charge-Coupled Device (CCD).

Referring to FIG. 6 as an example, light polarized in the vertical direction V can be emitted to the sample 52, and light scattered from the nanoparticles in the sample 52 can be polarization-controlled into the vertical direction V and the horizontal H direction by the rotating polarizer 22 or the polarization beam splitter 22 and provided to the spectrometer 21. The spectrometer 21 can generate a first scattering spectrum by measuring the scattered light having a polarization direction matching that of the light emitted to the sample 52, that is, scattered light LV polarized in the vertical direction V, and can generate a second scattering spectrum by measuring scattered light LH polarized in the horizontal direction H.

Next, the processor 30 can determine the sphericity of the nanoparticles on the basis of the values of the first and second scattering spectra corresponding to the peak wavelength of the first scattering spectrum (S30). In the present disclosure, sphericity may be an arbitrary parameter indicating how close the shape of nanoparticles is to a sphere, may be determined from the aspect ratio (AR) of nanoparticles, and may specifically be the reciprocal of the aspect ratio.

Referring again to FIG. 6, since the first scattering spectrum is generated by measuring the scattered light LV having the same polarization direction as that of the light emitted to the nanoparticles, the first scattering spectrum may be a Polarized Light Scattering (PLS) spectrum. In contrast, since the second scattering spectrum is generated by measuring the scattered light LH having a polarization direction different from, specifically shifted by 90 degrees from, the polarization direction of the light emitted to the nanoparticles, the second scattering spectrum may be a depolarized Light Scattering (dPLS) spectrum.

The processor 30 can determine the sphericity of the nanoparticles on the basis of the values of the first and second scattering spectra, more specifically, the ratio of the two values, at the peak wavelength of the first scattering spectrum, that is, the wavelength at which the value of the first scattering spectrum is the maximum.

Referring to FIGS. 6 and 7 together, the depolarization ratio (DR) can be defined as the ratio of the second scattering spectrum to the first scattering spectrum, and, in a specific example, as dPLS/PLS. As shown in FIG. 7, although the extinction/absorption spectra of two nanoparticles (CTAC and Citrate), which have significantly different sphericities when observed from TEM images, have very similar waveforms and the same peak wavelength, but the depolarization ratios (DRs) of the two nanoparticles may exhibit very large differences not only in waveform but also in value.

That is, it can be confirmed that extinction (or absorption) spectra are insensitive to identifying the sphericity of nanoparticles, whereas the depolarization ratio (DR) is highly sensitive. Accordingly, the processor 30 can calculate the depolarization ratio (DR) of the nanoparticles on the basis of the ratio of the first and second scattering spectra, and can determine the sphericity of the nanoparticles on the basis of the value of the depolarization ratio (DR) corresponding to the peak wavelength of the first scattering spectrum.

In general, when nanoparticles are not aggregated and a single-scattering condition is satisfied, the depolarization ratio also has a peak value at the peak wavelength of a first scattering spectrum, so the processor 30 may determine the sphericity of the nanoparticles on the basis of the peak value of the depolarization ratio. However, when nanoparticles are partially aggregated, the depolarization ratio spectrum may be distorted and it may be difficult to identify a peak, so it may be preferable to determine the sphericity of nanoparticles on the basis of the value of the depolarization ratio corresponding to the peak wavelength of a first scattering spectrum.

Referring to FIG. 8, no peak is observed in the depolarization ratio (DR) calculated by the processor 30, so it may be difficult to identify a peak value of the depolarization ratio (DR). Even in such a case, in the present disclosure, the processor 30 can identify the value of the depolarization ratio (DR) at the peak wavelength *λₘₐₓ* of the first scattering spectrum and, on this basis, can determine the sphericity of the nanoparticles.

The processor 30 can quantitatively determine the sphericity corresponding to the previously identified depolarization ratio. To this end, information on the sphericity corresponding to each depolarization ratio may be stored in advance in a memory, and the processor 30 may determine the sphericity of nanoparticles by referring to the memory.

Referring to FIG. 9 for a more detailed description, the relationships between depolarization ratios (DRs) and sphericities (for example, aspect ratios (ARs)) that have been previously obtained through simulations for plasmonic nanoparticles (sample #) synthesized in various ways may be stored in a memory. Meanwhile, although not shown in the drawings, the relationships between depolarization ratios (DRs) and sphericities for nanoparticles for respective manufacturers may also be stored in a memory.

Such relationships may be stored in the form of discrete data or may be stored as guideline functions derived through curve fitting.

In an example, when the relationships between depolarization ratios and sphericities are discretely defined on a look-up table, the processor 30 can identify the sphericity corresponding to a depolarization ratio by referring to the look-up table. In another example, when the relationships between depolarization ratios and sphericities are defined as functions, the processor 30 can calculate sphericity by substituting a depolarization ratio into a corresponding function.

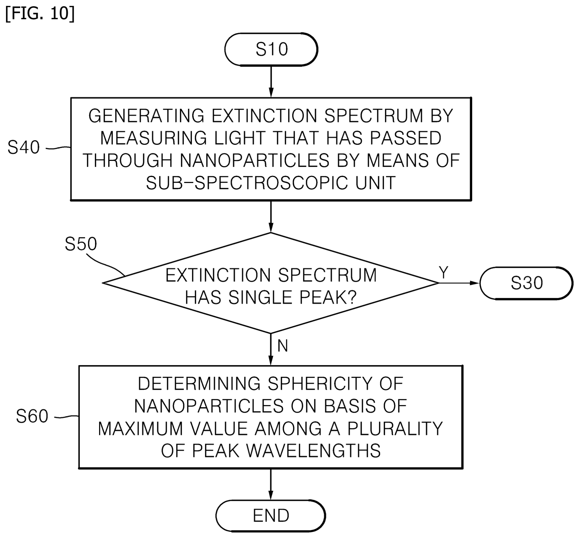

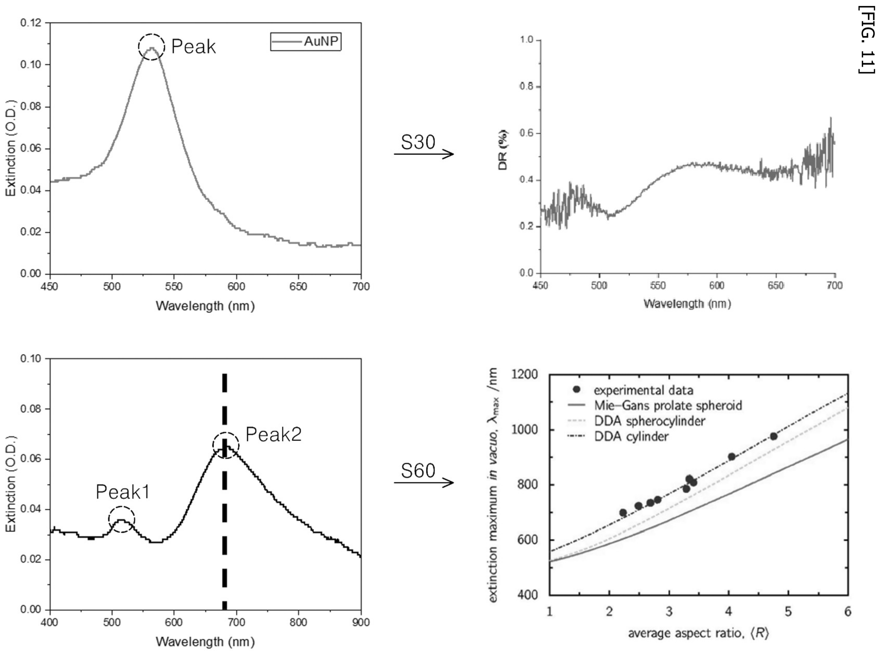

Hereinafter, a method for evaluating the spherical perfection of nanoparticles according to another embodiment of the present disclosure is described in detail with reference to FIGS. 10 and 11. The embodiment to be described hereafter is also performed by the system 1 shown in FIG. 4, and a description of matters identical to those described above is omitted.

FIG. 10 is a flowchart illustrating a method for evaluating the spherical perfection of nanoparticles according to another embodiment of the present disclosure and FIG. 11 is a diagram illustrating a comparison of spherical perfection determination processes according to the number of peaks in an extinction spectrum.

Referring to FIG. 10, a method for evaluating the spherical perfection according to another embodiment of the present disclosure is performed after the step S10 shown in FIG. 5, and may include a step S40 of generating an extinction spectrum by measuring light that has passed through the nanoparticles by means of the sub-spectroscopic unit, a step S50 of determining whether the extinction spectrum has a single peak, and a step S30 when there is a single peak and a step S60 of determining the sphericity of the nanoparticles on the basis of the maximum value among a plurality of peak wavelengths when the extinction spectrum has a plurality of peaks.

However, the method for evaluating spherical perfection shown in FIG. 10 is based on an embodiment, the steps of the present disclosure are not limited to the embodiment shown in FIG. 10, and if necessary, some steps may be added, changed, or removed.

The steps shown in FIG. 10 can also be performed by the processor 30 described above, and hereafter, the steps are described in detail.

The processor 30 can generate an extinction spectrum by measuring light that has passed through the nanoparticles by means of the sub-spectroscopic unit 40 (S40). Referring again to FIG. 4, the sub-spectroscopic unit 40 can generate an extinction spectrum by measuring light that has passed through the nanoparticles, and, to this end, may include: an optical assembly 41 including a collimating lens that collects the light, which has passed through the nanoparticles, and a filter that adjusts the intensity of the transmitted light; and a sub-spectrometer 42 generating an extinction spectrum by measuring the light adjusted by the optical assembly 41.

In this configuration, as light is absorbed or scattered by the nanoparticles while passing through the nanoparticles, and the light that is not absorbed or scattered can be measured by the sub-spectrometer 42.

Next, the processor 30 can determine whether the extinction spectrum generated by the sub-spectroscopic unit 40 has a single peak (S50).

Referring to FIG. 11, when the extinction spectrum has a single peak as the result of the determination in step S50, the sphericity of the nanoparticles can be determined from the depolarization ratio (DR) according to step S30 described above. In contrast, when the extinction spectrum has a plurality of peaks, the processor 30 can determine the sphericity on the basis of the maximum value among a plurality of peak wavelengths (S60).

Referring to FIGS. 3 and 11 together, the lower the sphericity of the nanoparticles is, for example, the closer the nanoparticles are to a rod shape, the absorption spectrum or the extinction spectrum may have two or more peaks. As described with reference to FIG. 3, since the absorption/extinction spectrum by wavelength of nanoparticles exhibits higher optical distinguishability as the spherical perfection decreases, the sphericity of nanoparticles of which spherical perfection is lower than a certain level can be evaluated only on the basis of the relatively longer peak wavelength among a plurality of peak wavelengths.

The processor 30 can identify the maximum value among the plurality of peak wavelengths of the extinction spectrum, and can quantitatively determine the corresponding sphericity. To this end, information on the sphericity corresponding to each maximum peak wavelength may be stored in advance in a memory, and the processor 30 may determine the sphericity of nanoparticles by referring to the memory.

Specifically, referring to the graph corresponding to step S60 in FIG. 11, a memory may store the relationships between the sphericity (for example, the aspect ratio) of nanoparticles and the peak wavelength of an extinction/absorption spectrum, which has been previously obtained through experiments on various simulated models (DDA cylinder, DDA spherocylinder, and Mie-Gans prolate spheroid). Such relationships may be stored in the form of discrete data or may be stored as guideline functions derived through curve fitting.

In an example, when the relationships between peak wavelengths and sphericities are discretely defined on a look-up table, the processor 30 can identify the sphericity corresponding to a peak wavelength by referring to the look-up table. In another example, when the relationships between peak wavelengths and sphericities are defined as functions, the processor 30 can calculate sphericity by substituting a peak wavelength into a corresponding function.

As described above, the present disclosure has an advantage that, by quantitatively evaluating the spherical perfection of a large number of plasmonic nanoparticles in a solution itself through an optical method, it is possible to quickly identify the quality of spherical nanoparticles in the solution even without statistical analysis through TEM imaging of some sampled individual nanoparticles.

Although the present disclosure was described with reference to the exemplary drawings, it is apparent that the present disclosure is not limited to the embodiments and drawings in the specification and may be modified in various ways by those skilled in the art within the range of the spirit of the present disclosure. Further, even though the operation effects according to the configuration of the present disclosure were not clearly described with the above description of embodiments of the present disclosure, it is apparent that effects that can be expected from the configuration should be also admitted.

## Claims

1. A system for evaluating spherical perfection of nanoparticles, the system comprising:
a light output unit configured to emit light polarized in one direction to the nanoparticles;
a spectroscopic unit configured to generate first and second scattering spectra by controlling a polarization direction of light scattered from the nanoparticles into one direction and another direction and measuring the polarization-controlled light; and
a processor configured to determine sphericity of the nanoparticles on the basis of values of the first and second scattering spectra corresponding to a peak wavelength of the first scattering spectrum.

2. The system of claim 1, wherein the light output unit includes:
a light source configured to output light;
a collimating lens configured to collimate the light output from the light source; and
a polarizer configured to control polarization of the light collimated by the lens into the one direction.

3. The system of claim 1 or 2, wherein the spectroscopic unit includes:
a rotating polarizer or a polarization beam splitter (PBS) capable of controlling polarization of light scattered from the nanoparticles into the one direction and the another direction;
a collimating lens configured to collimate the polarization-controlled light from the rotating polarizer or the polarization beam splitter; and
a spectrometer configured to generate the first and second scattering spectra by measuring the light collimated by the collimating lens.

4. The system of claim 3, wherein the spectrometer generates the first scattering spectrum by measuring the light polarization-controlled into the one direction, and generates the second scattering spectrum by measuring the light polarization-controlled into the another direction.

5. The system of any one of claims 1 to 4, wherein the sphericity is determined from an aspect ratio of the nanoparticles.

6. The system of any one of claims 1 to 5, wherein the processor calculates a depolarization ratio on the basis of a ratio of the first and second scattering spectra, and determines the sphericity on the basis of a value of the depolarization ratio corresponding to the peak wavelength.

7. The system of any one of claims 1 to 6, further comprising a sub-spectroscopic unit configured to generate an extinction spectrum by measuring light that has passed through the nanoparticles,
wherein when the extinction spectrum has a plurality of peaks, the processor determines the sphericity on the basis of a maximum value among a plurality of peak wavelengths.

8. The system of claim 7, wherein the sub-spectroscopic unit includes:
an optical assembly configured to control light that has passed through the nanoparticles; and
a sub-spectrometer configured to generate the extinction spectrum by measuring light absorbed by the optical assembly.

9. A method for evaluating spherical perfection of nanoparticles, the method comprising:
emitting light polarized in one direction to nanoparticles by means of a light output unit;
generating first and second scattering spectra by controlling a polarization direction of light scattered from the nanoparticles into one direction and another direction and measuring the polarization-controlled light by means of a spectroscopic unit; and
determining sphericity of the nanoparticles on the basis of values of the first and second scattering spectra corresponding to a peak wavelength of the first scattering spectrum by means of a processor.

10. The method of claim 9, wherein the determining of sphericity includes:
calculating a depolarization ratio on the basis of a ratio of the first and second scattering spectra; and
determining the sphericity on the basis of a value of the depolarization ratio corresponding to the peak wavelength.

11. The method of claim 9 or 10, further comprising:
generating an extinction spectrum by measuring light that has passed through the nanoparticles by means of a sub-spectroscopic unit; and
determining the sphericity on the basis of a maximum value among a plurality of peak wavelengths by means of the processor when the extinction spectrum has a plurality of peaks.
